# EUROPÄISCHE PATENTSCHRIFT

(11) **EP 2 657 582 B1**
(45) Veröffentlichungstag und Bekanntmachung des Hinweises auf die Patenterteilung: **17.12.2014**
(21) Anmeldenummer: 13162419.9
(22) Anmeldetag: 05.04.2013
(51) Int. Cl.: F16K 1/22

(54) **Absperrarmatur mit einer drehbar gelagerten Absperrscheibe**
Shut-off valve with a shut-off disc with a rotating bearing
Armature de verrouillage dotée d'une vanne d'arrêt rotative intégrée

(30) Priorität: 27.04.2012 DE 102012103728
(43) Veröffentlichungstag der Anmeldung: 30.10.2013
(73) Patentinhaber: Metso Automation MAPAG GmbH, 86497 Horgau (DE)
(72) Erfinder: Pauer, Andreas, 86179 Augsburg (DE); Wörner, Andreas, 89407 Dillingen (DE)
(74) Vertreter: Geirhos, Johann

(56) Entgegenhaltungen:
- EP-B1- 1 207 325
- GB-A- 759 111
- US-A1- 2010 264 351

## Beschreibung

Die Erfindung betrifft eine Absperrarmatur mit einem Gehäuse, einem in dem Gehäuse angeordneten Ventilsitz und einer den Ventilsitz ansteuernden Absperrscheibe, die im Gehäuse mittels einer Lagerwelle um eine senkrecht zur Längsachse des Gehäuses angeordnete Drehachse zwischen einer Öffnungsstellung und einer Sperrstellung drehbar gelagert ist, wobei zwischen dem Gehäuse und der Lagerwelle eine Lagerbuchseneinrichtung angeordnet ist.

Eine gattungsgemäße Absperrarmatur, die eine doppelt-exzentrische gelagerte Absperrscheibe aufweist, die mit einer senkrecht zur Längsachse des Gehäuses drehbar gelagerten Lagerwelle drehfest verbunden und zwischen einer Öffnungsstellung und einer Sperrstellung drehbar ist, ist aus der EP 1 207 325 B1 bekannt. Bei derartigen Absperrarmaturen erfolgt die Lagerung der Lagerwelle im Gehäuse um die senkrecht zur Längsachse des Gehäuses angeordnete Drehachse der Absperrscheibe mittels einer Lagerbuchseneinrichtung. Ein gehäuseseitiger Ventilsitz und die Absperrscheibe bilden ein Dichtsystem, das in der Sperrstellung der Absperrscheibe eine hohe Dichtigkeit aufweisen soll. Bei der aus der EP 1 207 325 B1 bekannten Absperrarmatur ist der gehäuseseitige Ventilsitz an einem Metallring ausgebildet, der mittels Befestigungsschrauben im Gehäuse angeordnet und befestigt ist. Die Befestigungsschrauben sind in einem Befestigungsring eingeschraubt, der mittels einer Halteeinrichtung an der Innenwand des Gehäuses abgestützt ist. Mit den Befestigungsschrauben und dem Befestigungsring wird der den Ventilsitz bildende Metallring in seiner Position im Gehäuse fixiert. Bei derartigen Absperrarmaturen ist eine Einstellbarkeit des Ventilsitzes nicht vorgesehen, so dass für eine hohe Dichtigkeit der Absperrarmatur eine hohe Fertigungsgenauigkeit erforderlich ist.

Derartige Absperrarmaturen werden beispielsweise in der chemischen Industrie, im Lebensmittelbereich und im Arzneibereich eingesetzt, um Rohrleitungen in einer Sperrstellung der Absperrarmatur abzusperren. Beim Einsatz derartiger Absperrarmaturen für abrasive Medien mit Partikeln oder Pulver entstehen durch die innerhalb des Gehäuses angeordneten innenliegenden Befestigungsbauteile des Dichtsystems, insbesondere die Befestigungsschrauben, den Befestigungsring und die Halteeinrichtung, tote Ecken, Nischen und Hinterschneidungen, in denen sich Partikel oder Pulfer und somit Verschmutzungen ablagern und ansammeln können, die nur schlecht gereinigt werden können, wodurch ein hoher Reinigungsaufwand entsteht, wenn die Absperrarmatur beispielsweise bei einem Wechsel des Mediums gereinigt werden muss. Zudem ist durch die innenliegenden Befestigungsschrauben bei in einer Rohrleitung eingebautem Zustand der Absperrarmatur keine Einstellung des Ventilsitzes möglich, wodurch ein Ausbau der Absperrarmatur aus der Rohrleitung für die Einstellung des Dichtsystems erforderlich ist.

Der vorliegenden Erfindung liegt die Aufgabe zugrunde, eine Absperrarmatur der eingangs genannten Gattung zur Verfügung zu stellen, die mit geringem Aufwand eine Einstellbarkeit des von dem gehäuseseitigen Ventilsitz und der Absperrscheibe gebildeten Dichtsystems ermöglicht und eine gute Reinigbarkeit aufweist.

Diese Aufgabe wird erfindungsgemäß dadurch gelöst, dass die Lagerbuchseneinrichtung als Doppelbuchse mit einer die Lagerwelle aufnehmenden Innenbuchse und einer die Innenbuchse aufnehmenden, in einer Gehäusebohrung des Gehäuses angeordneten Außenbuchse ausgebildet ist, wobei die Innenbuchse und die Außenbuchse jeweils als Exzenterbuchse ausgebildet ist. Mit einer derartigen erfindungsgemäßen Lagerung der Lagerwelle in einer Doppelbuchse, die von einer exzentrischen Innenbuchse und einer exzentrischen Außenbuchse gebildet ist, kann durch entsprechendes Verdrehen der beiden Exzenterbuchsen zueinander eine Bewegung der Lagerwelle und somit der Absperrscheibe rein in Längsrichtung entlang der Längsachse des Gehäuses erzielt werden und somit durch ein Verstellen der Absperrscheibe in Längsrichtung des Gehäuses das von der Absperrscheibe und dem Ventilsitz im Gehäuse gebildete Dichtsystem eingestellt und justiert werden. Mit den beiden Exzenterbuchsen wird somit eine einfache Einstellbarzeit und Justage des Dichtsystems erzielt. Durch den Entfall von innenliegenden Befestigungsbauteilen, mit denen bei einer Absperrarmatur des Standes der Technik zur Justage des Dichtsystems der Ventilsitz im Gehäuse verstellt wird, werden bei einer erfindungsgemäßen Absperrarmatur tote Ecken, Nischen und Hinterschneidungen innerhalb des Gehäuses vermieden, so dass weiterhin eine gute und einfache Reinigbarkeit der erfindungsgemäßen Absperrarmatur und Vorteile beim Einsatz in der Arznei- und Lebensmittelindustrie erzielt wird.

Mit einer bevorzugten Ausführungsform der Erfindung weisen die Außenbuchse und die Innenbuchse entgegengerichte Exzentrizitäten auf. Mit derartigen, entgegengerichteten Exzentrizitäten der beiden Buchsen, wird auf einfache Weise erzielt, dass durch Verdrehen der beiden Buchsen in unterschiedlichen Richtungen, beispielsweise um den gleichen Drehwinkel bei gleichem Maß der Exzentrizitäten der Innenbuchse und der Außenbuchse, die Absperrscheibe rein in Längsrichtung des Gehäuses verstellt wird. Die Absperrscheibe kann somit auf einfache Weise in Längsrichtung des Gehäuses gegen den gehäuseseitigen Ventilsitz bewegt werden und das Dichtsystem exakt eingestellt und justiert werden.

Durch die erfindungsgemäße Einstellbarkeit der Lagerwelle und somit der Absperrscheibe relativ zu dem gehäuseseitigen Ventilsitz, wird gemäß einer vorteilhaften Weiterbildung der Erfindung ermöglicht, den Ventilsitz von einer einstückig an der Innenwand des Gehäuses angeformten Dichtfläche auszubilden. Hierdurch werden weitere Vorteile hinsichtlich einer guten und einfachen Reinigbarkeit der erfindungsgemäßen Absperrarmatur erzielt, da im Inneren des Gehäuses keine Befestigungsbauteile für den gehäuseseitigen Ventilsitz erforderlich sind.

Weitere Vorteile hinsichtlich einer guten und einfachen Reinigbarkeit sind erzielbar, wenn gemäß einer Weiterbildung der Erfindung am Außenumfang der Absperrscheibe ein einstückig angeformtes Dichtelement ausgebildet ist, das die Dichtfläche ansteuert. Im Inneren des Gehäuses sind somit weiterhin keine Befestigungsbauteile für ein mit dem gehäuseseitigen Ventilsitz zusammenwirkendes Dichtelement an der Absperrscheibe erforderlich, wodurch die Reinigung der Absperrarmatur weiter vereinfacht und erleichtert wird.

Die erfindungsgemäße Absperrarmatur kann somit im Inneren des Gehäuses ohne Befestigungsbauteile für den gehäuseseitigen Ventilsitz und für das Dichtelement an der Absperrscheibe hergestellt werden, wodurch tote Ecken, Nischen und Hinterschneidungen im Inneren des Gehäuses vermieden werden und sich somit die erfindungsgemäße Absperrarmatur besonders für abrasive Medien mit Partikeln oder Pulver eignet.

Die Außenbuchse ist zweckmäßigerweise mit einer exzentrisch zur Gehäusebohrung angeordneten Aufnahmebohrung versehen, in der die Innenbuchse angeordnet ist. Hierdurch kann auf einfache Weise an der Außenbuchse eine erste Exzentrizität erzielt werden.

Zweckmäßigerweise ist die Innenbuchse mit einer exzentrisch zur Aufnahmebohrung der Außenbuchse angeordneten Aufnahmebohrung versehen, in der die Lagerwelle angeordnet ist. Hierdurch kann auf einfache Weise an der Innenbuchse eine zweite Exzentrizität erzielt werden.

Gemäß einer bevorzugten Weiterbildung der Erfindung ist die Innenbuchse und die Außenbuchse jeweils mit einem Radialflansch versehen, der von Außen an der Absperrarmatur zugänglich ist und ein Verdrehen der Innenbuchse und der Außenbuchse ermöglicht. Hierdurch werden weitere Vorteile erzielt, da das Verdrehen der beiden Buchsen durch die Radialflansche von Außen erfolgen kann, so dass die Einstellung und die Justage des Dichtsystems von Außen und bei einer in einer Rohrleitung montierten Absperrarmatur erfolgen kann.

Zweckmäßigerweise ist zur Abdichtung der Außenbuchse gegenüber der Gehäusebohrung eine Dichtungseinrichtung, insbesondere ein Dichtungsring, vorgesehen. Mit einer derartigen Dichtungseinrichtung kann auf einfache Weise die Außenbuchse gegenüber der Gehäusebohrung nach Außen zur Umgebung abgedichtet werden.

Mit Vorteil ist zur Abdichtung der Innenbuchse gegenüber der Aufnahmebohrung der Außenbuchse eine Dichtungseinrichtung, insbesondere ein Dichtungsring, vorgesehen. Mit einer derartigen Dichtungseinrichtung kann auf einfache Weise die Innenbuchse gegenüber der Außenbuchse nach Außen zur Umgebung abgedichtet werden

Die drehbar in der Innenbuchse angeordnete Lagerweile kann auf einfache Weise nach Außen zur Umgebung abgedichtet werden, wenn gemäß einer zweckmäßigen Weiterbildung der Erfindung zur Abdichtung der Lagerwelle gegenüber der Innenbuchse eine Dichtungseinrichtung, insbesondere eine Stopfbuchspackung, vorgesehen ist.

Hinsichtlich einer einfachen und guten Reinigbarkeit der erfindungsgemäßen Absperrarmatur sind weitere Vorteile erzielbar, wenn eine Spülvorrichtung zum Spülen des Ringspaltes zwischen der Gehäusebohrung und der Außenbuchse sowie des Ringspaltes zwischen der Außenbuchse und der Innenbuchse sowie des Ringspaltes zwischen der Innenbuchse und der Lagerwelle vorgesehen ist. Mit einer derartigen Spülvorrichtung können auf einfache Weise die Ringspalte an der von der Doppelbuchse gebildeten Lagerung der Absperrscheibe mit einem geeigneten Spülmedium gespült und somit die Lagerung der Absperrscheibe gereinigt werden.

Die erfindungsgemäße Absperrscheibe kann mit der Lagerwelle einseitig und somit fliegend im Gehäuse gelagert werden. Besondere Vorteile hinsichtlich einer stabilen Lagerung der Absperrscheibe im Gehäuse ergeben sich, wenn die Absperrscheibe gemäß einer vorteilhaften Ausführungsform der Erfindung mittels einer durchgehenden Lagerwelle oder einer geteilten Lagerwelle beidseitig im Gehäuse drehbar gelagert ist, wobei an jeder Lagerstelle eine Lagerbuchseneinrichtung mit einer Doppelbuchse angeordnet ist.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Absperrarmatur in einer perspektivischen Darstellung,
- Figur 2: einen Längsschnitt entlang der Linie A-A der Figur 1,
- Figur 3: einen Ausschnitt der Figur 2 in einer vergrößerten Darstellung und
- Figur 4: einen Schnitt entlang der Linie B der Figur 1.

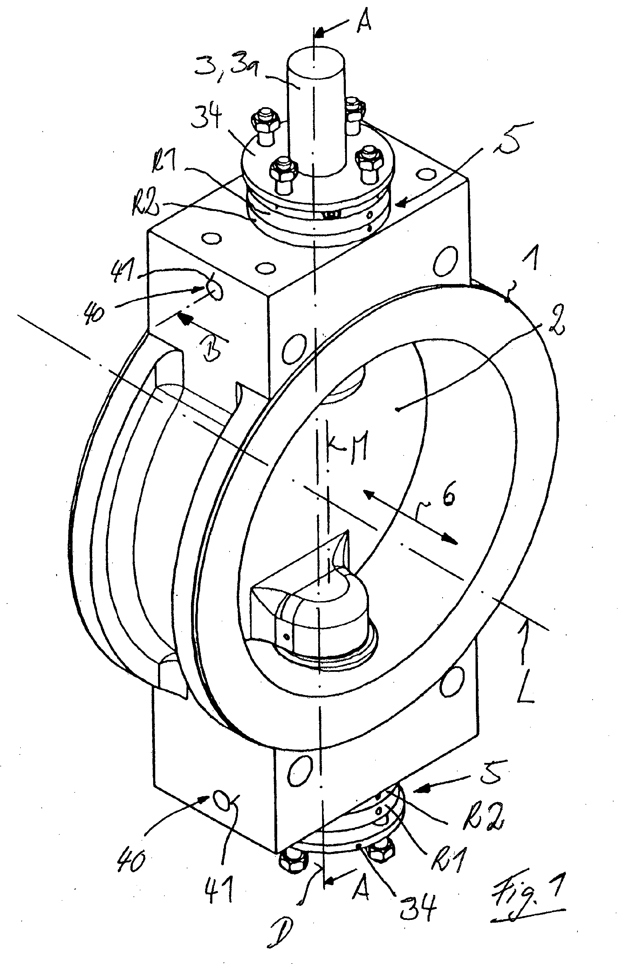

In der Figur 1 ist eine erfindungsgemäße Absperrarmatur in einer perspektivischen Darstellung gezeigt. Die Absperrarmatur weist ein Gehäuse 1 auf, in dem eine Absperrscheibe 2 um eine senkrecht zur Längsachse L des Gehäuses 1 angeordnete Drehachse D drehbar gelagert ist.

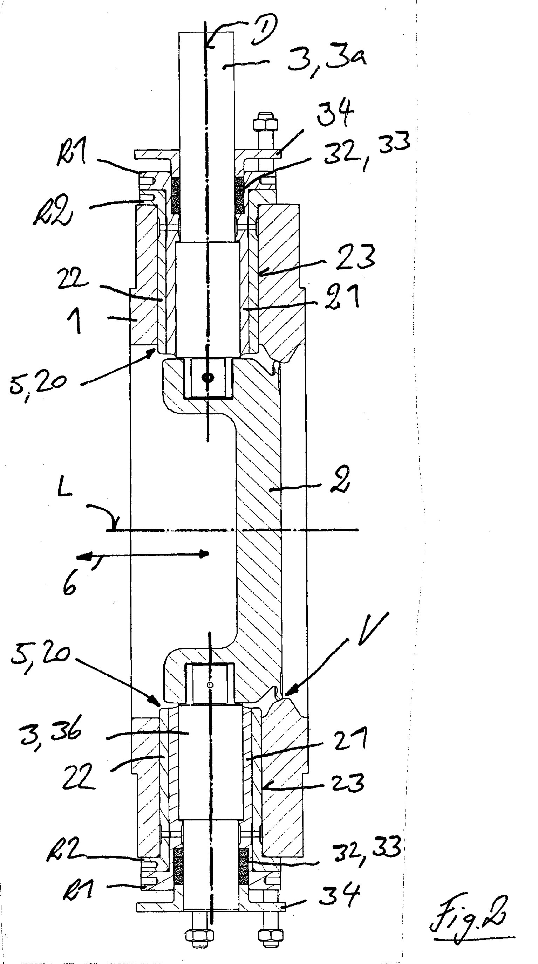

Zur drehbaren Lagerung der Absperrscheibe 2 im Gehäuse 1 ist eine Lagerwelle 3 vorgesehen, mit der die Absperrscheibe 2 beidseitig im Gehäuse 1 drehbar gelagert ist. Im dargestellten Ausführungsbeispiel ist die Lagerwelle 3 als geteilte Lagerwelle mit einer oberen Lagerwelle 3a und einer unteren Lagerwelle 3b ausgeführt, die - wie aus der Figur 2 näher ersichtlich ist - jeweils mit der Absperrscheibe 2 drehfest verbunden ist. Die obere Lagerwelle 3a steht auf nicht mehr dargestellte Weise mit einem Antrieb in Verbindung. Die untere Lagerwelle 3b bildet einen Lagerzapfen.

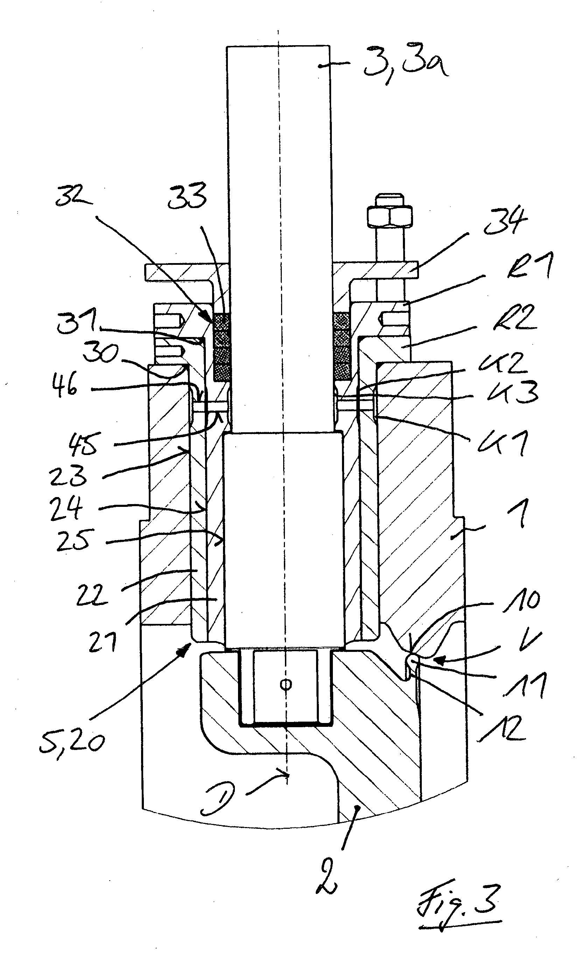

Zwischen dem Gehäuse 1 und der Lagerwelle 3a bzw. der Lagerwelle 3b ist an der jeweiligen Lagerstelle jeweils eine Lagerbuchseneinrichtung 5 angeordnet. In der Figur 3 ist der Bereich der oberen Lagerstelle mit der oberen Lagerwelle 3a und der Lagerbuchseneinrichtung 5 näher dargestellt. Die untere Lagerstelle mit der unteren Lagerwelle 3b ist analog aufgebaut.

In den Figuren 1 bis 3 ist die Absperrscheibe 2 in der Schtießstellung dargestellt, in der ein im Gehäuse 1 angeordnete Ventilsitz V von der Absperrscheibe 2 angesteuert ist.

Durch Verschwenken der Absperrscheibe 2 um einen Drehwinkel von 90° um die Drehachse D kann die Absperrscheibe 2 in eine Öffnungsstellung gebracht werden, in der die Absperrarmatur in Durchflussrichtung 6 von Medium, beispielsweise abrasivem Medium mit Partikeln oder Pulver, durchströmbar ist.

Bei der erfindungsgemäßen Absperrarmatur ist der Ventilsitz V von einer einstückig an der Innenwand des Gehäuses 1 und somit direkt am Gehäuse 1 angeformten Dichtfläche 10 gebildet, die im dargestellten Ausführungsbeispiel von einer an der Innenwand des Gehäuses 1 ausgebildeten Kegelfläche gebildet ist. An der Absperrscheibe 2 ist ein einstückig und somit direkt angeformtes Dichtelement 11 ausgebildet, das in der Sperrstellung der Absperrscheibe 2 mit der gehäuseseitigen Dichtfläche 10 zusammenwirkt und diese ansteuert. Das Dichtelement 11 ist im dargestellten Ausführungsbeispiel von einem wulstartigen Dichtring gebildet, der über einen Steg 12 an der Absperrscheibe 2 einstückig angeformt ist.

Die Absperrscheibe 2 ist bevorzugt doppelt-exzentrisch im Gehäuse 1 angeordnet. Die Absperrscheibe 2 mit dem unmittelbar angeformten Dichtelement 11 ist von der Drehachse D - wie in der Figur 2 ersichtlich ist - in Längsrichtung der Längsachse L der Absperrarmatur beabstandet, wodurch eine erste Exzentrizität gebildet ist. Durch eine seitliche Beabstandung der Drehachse D von einer senkrecht zur Längsachse L stehenden Mittelachse M des Gehäuses 1 wird eine zweite Exzentrizität gebildet.

Bei der erfindungsgemäßen Absperrarmatur ist die zwischen der Lagerwelle 3a bzw. 3b und dem Gehäuse 1 an der entsprechenden Lagerstelle angeordnete Lagerbuchseneinrichtung 5 jeweils als Doppelbuchse 20 mit einer die Lagerwelle 3a bzw. 3b aufnehmenden Innenbuchse 21 und einer Außenbuchse 22 ausgebildet, die die Innenbuchse 21 aufnimmt und in einer Gehäusebohrungen 23 des Gehäuses 1 angeordnet ist. Die Innenbuchse 21 und die Außenbuchse 22 sind jeweils als Exzenterbuchsen ausgebildet und mit entgegengerichteten und somit gegensätzlichen Exzentrizitäten versehen. Die Innenbuchse 21 und die Außenbuchse 22 sind bevorzugt mit Exzentrizitäten von gleichem Maß versehen.

Die in der Gehäusebohrung 23 angeordnete Außenbuchse 22 ist mit einer exzentrisch zur Gehäusebohrung 23 angeordneten Aufnahmebohrung 24 versehen, in der die Innenbuchse 21 angeordnet ist. Entsprechend ist die Innenbuchse 21 mit einer exzentrisch zur Aufnahmebohrung 24 angeordneten Aufnahmebohrung 25 versehen, in der die Lagerwelle 3a bzw. 3b drehbar gelagert ist.

Die Innenbuchse 21 und die Außenbuchse 22 ist jeweils mit einem Radialflansch R1, R2 versehen, der von Außen am Gehäuse 1 zugänglich ist und ein Verdrehen der Buchsen 21, 22 ermöglicht.

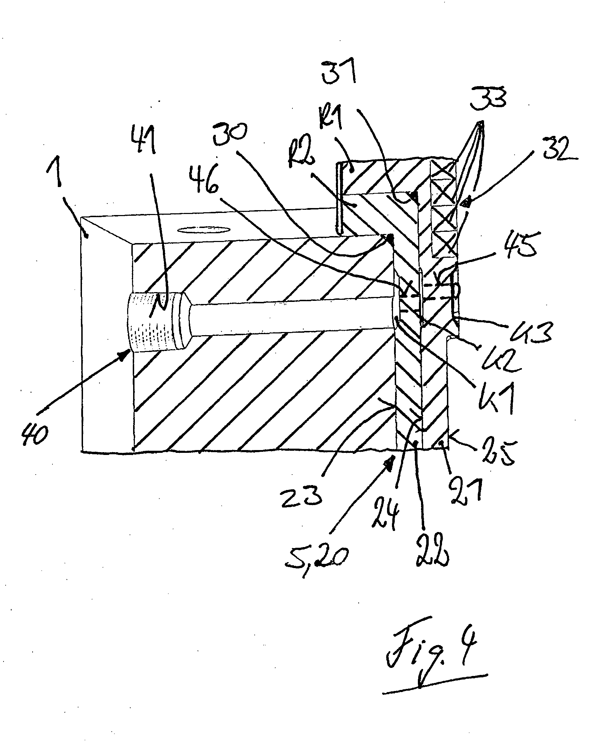

In den Figuren 3 und 4 ist weiterhin die Abdichtung der Lagerbuchseneinrichtung 20 und der Lagerwelle 3a, 3b gegenüber der Umgebung näher dargestellt.

Zur Abdichtung der Außenbuchse 22 gegenüber der Gehäusebohrung 23 ist eine Dichtungseinrichtung 30 vorgesehen, die zwischen dem Gehäuse 1 und der Außenbuchse 22 im Bereich des Radialflansches R2 angeordnet ist. Im dargestellten Ausführungsbeispiel ist die Dichtungseinrichtung 30 von einem Dichtungsring, beispielsweise einem O-Ring, gebildet.

Zur Abdichtung der Innenbuchse 21 gegenüber der Aufnahmebohrung 24 der Außenbuchse 22 ist eine Dichtungseinrichtungen 31 vorgesehen, die zwischen der Innenbuchse 21 und der Außenbuchse 22 im Bereich zwischen den beiden Radialflansche R1, R2 angeordnet ist. Im dargestellten Ausführungsbeispiel ist die Dichtungseinrichtung 31 von einem Dichtungsring, beispielsweise einem O-Ring, gebildet.

Zur Abdichtung der Lagerwelle 3a bzw. 3b gegenüber der Aufnahmebohrung 25 der Innenbuchse 21 ist eine Dichtungseinrichtung 32 vorgesehen. Die Dichtungseinrichtung 32 ist von einer Stopfbuchspackung 33 gebildet, die mittels eines Druckringes 34 verpressbar ist.

Die erfindungsgemäße Absperrarmatur weist aufgrund der einstückig am Gehäuse 1 angeformten Dichtfläche 10 und dem einstückig an der Absperrscheibe 2 angeformten Dichtelement 11 keine im Gehäuse 1 befestigten Bauteile auf, so dass für das von der Dichtfläche 10 und dem Dichtelement 11 gebildeten Dichtsystem keine im Innenbereich des Gehäuses 1 angeordneten Befestigungsbauteile, beispielsweise Befestigungsschrauben, erforderlich sind.

Im Innenbereich des Gehäuses 1 werden somit tote Ecken, Nischen und Hinterschneidungen durch innenliegende Befestigungsbauteile vermieden, wodurch sich die erfindungsgemäße Absperrarmatur besonders in Chemieanwendungen, im Arzneimittelbereich oder im Lebensmittelbereich zum Absperren von beispielsweise abrasiven Medien mit Partikeln oder Pulver eignet. Durch die einstückige Ausbildung der Dichtfläche 10 im Gehäuse 1 und der einstückigen Ausbildung des Dichtelements 11 an der Absperrscheibe 2 wird weiterhin eine einfache und gute Reinigbarkeit der erfindungsgemäßen Absperrarmatur erzielt.

Um weiterhin die von den Doppelbuchsen 20 gebildeten Lagerbuchseneinrichtungen 20 reinigen zu können, ist bei der erfindungsgemäßen Absperrarmatur eine Spülvorrichtung 40 vorgesehen, mit der der Ringspalt zwischen der Gehäusebohrung 23 und der Außenbuchse 22 sowie der Ringspalt zwischen der Außenbuchse 22 und der Innenbuchse 21 sowie der Ringspalt zwischen der Innenbuchse 21 und der Lagerwelle 3a bzw. 3b mit einem Spülmedium gespült werden kann. Die Spülvorrichtung 40 ist - wie in der Figur 4 näher dargestellt ist - von einem bohrungsartigen Spülanschluss 41 am Gehäuse 1 gebildet, der mit einem Ringkanal K1 zwischen der Gehäusebohrung 23 und der Außenbuchse 22, einem Ringkanal K2 zwischen der Außenbuchse 22 und der Innenbuchse 21 und einem Ringkanal K3 zwischen der Innenbuchse 21 und der Lagerwelle 3a bzw. 3b verbunden ist. Die Verbindung der Ringkanäle K1, K2, K3 miteinander erfolgt beispielsweise durch entsprechende Querbohrungen 45, 46 in der Innenbuchse 21 und der Außenbuchse 22.

Mit der erfindungsgemäßen Doppelbuchse 20, die jeweils eine exzentrische Innenbuchse 21 und eine exzentrische Außenbuchse 22 umfasst, kann durch entgegengesetztes Verdrehen der Innenbuchse 21 und der Außenbuchse 22 in unterschiedliche Drehrichtungen um den gleichen Drehwinkel eine Bewegung der Absperrscheibe 2 mit dem Dichtelement 11 nur in Längsrichtung entlang der Längsachse L des Gehäuses 1 gegen die Dichtfläche 10 im Gehäuse 1 erzielt werden. Durch das entgegengerichtete Verdrehen der beiden Exzenterbuchsen 21, 22 um den gleichen Drehwinkel kann somit durch die Bewegung der Absperrscheibe 2 in Längsrichtung entlang der Längsachse L des Gehäuses 1 das Dichtsystem in der Sperrstellung der Absperrscheibe 2 eingestellt und justiert werden. Durch diese Einstellbarkeit des Dichtsystems wird ein geringer Herstellaufwand hinsichtlich der Genauigkeit der einstückig am Gehäuse 1 angeformten Dichtfläche 10 und des einstückig an der Absperrscheibe 2 angeformten Dichtelements 11 erzielt. Mit der erfindungsgemäßen exzentrischen Doppelbuchse 20 kann somit die Absperrscheibe 2 mit dem metallischen Dichtelement 11 auf einfache Weise justiert werden, so dass bei geringen Genauigkeitsanforderungen und Toleranzanforderungen für das Gehäuse 1 und die Absperrscheibe 2 eine hohe Dichtigkeit der Absperrarmatur erzielt wird.

Mit den erfindungsgemäßen exzentrischen Buchsen 21, 22 wird zudem ermöglicht, dass bei Verschleiß das Dichtelement 11 an der Absperrscheibe 2 bzw. die Dichtfläche 10 im Gehäuse 1 nachgearbeitet werden kann und das Dichtsystem durch Verstellen der Absperrscheibe 2 nachgestellt werden kann.

## Patentansprüche

1. Absperrarmatur mit einem Gehäuse (1), einem in dem Gehäuse (1) angeordneten Ventilsitz (V) und einer den Ventilsitz (V) ansteuernden Absperrscheibe (2), die im Gehäuse (1) mittels einer Lagerwelle (3; 3a, 3b) um eine senkrecht zur Längsachse (L) des Gehäuses (1) angeordnete Drehachse (D) zwischen einer Öffnungsstellung und einer Sperrstellung drehbar gelagert ist, wobei zwischen dem Gehäuse (1) und der Lagerwelle (3; 3a, 3b) eine Lagerbuchseneinrichtung (5) angeordnet ist, **dadurch gekennzeichnet, dass** die Lagerbuchseneinrichtung (5) als Doppelbuchse (20) mit einer die Lagerwelle (3; 3a, 3b) aufnehmenden Innenbuchse (21) und einer die Innenbuchse (21) aufnehmenden, in einer Gehäusebohrung (23) des Gehäuses (1) angeordneten Außenbuchse (22) ausgebildet ist, wobei die Innenbuchse (21) und die Außenbuchse (22) jeweils als Exzenterbuchse ausgebildet ist.

2. Absperrarmatur nach Anspruch 1, **dadurch gekennzeichnet, dass** die Außenbuchse (22) und die Innenbuchse (21) entgegengerichte Exzentrizitäten aufweisen.

3. Absperrarmatur nach Anspruch 1 oder 2, **dadurch gekennzeichnet, dass** der Ventilsitz (V) von einer einstückig an der Innenwand des Gehäuses (1) angeformten Dichtfläche (10) ausgebildet ist.

4. Absperrarmatur nach einem der Ansprüche 1 bis 3, **dadurch gekennzeichnet, dass** am Außenumfang der Absperrscheibe (2) ein einstückig angeformtes Dichtelement (11) ausgebildet ist, das die Dichtfläche (10) ansteuert.

5. Absperrarmatur nach einem der Ansprüche 1 bis 4, **dadurch gekennzeichnet, dass** die Außenbuchse (22) mit einer exzentrisch zur Gehäusebohrung (23) angeordneten Aufnahmebohrung (24) versehen ist, in der die Innenbuchse (21) angeordnet ist.

6. Absperrarmatur nach Anspruch 5, **dadurch gekennzeichnet, dass** die Innenbuchse (21) mit einer exzentrisch zur Aufnahmebohrung (24) der Außenbuchse (22) angeordneten Aufnahmebohrung (25) versehen ist, in der die Lagerwelle (3; 3a, 3b) angeordnet ist.

7. Absperrarmatur nach einem der Ansprüche 1 bis 6, **dadurch gekennzeichnet, dass** die Innenbuchse (21) und die Außenbuchse (22) jeweils mit einem Radialflansch (R1, R2) versehen ist, der von Außen an der Absperrarmatur zugänglich ist und ein Verdrehen der Innenbuchse (21) und der Außenbuchse (22) ermöglicht.

8. Absperrarmatur nach einem der Ansprüche 1 bis 7, **dadurch gekennzeichnet, dass** zur Abdichtung der Außenbuchse (22) gegenüber der Gehäusebohrung (23) eine Dichtungseinrichtung (30), insbesondere ein Dichtungsring, vorgesehen ist.

9. Absperrarmatur nach einem der Ansprüche 1 bis 8, **dadurch gekennzeichnet, dass** zur Abdichtung der Innenbuchse (21) gegenüber der Aufnahmebohrung (24) der Außenbuchse (22) eine Dichtungseinrichtung (31), insbesondere ein Dichtungsring, vorgesehen ist.

10. Absperrarmatur nach einem der Ansprüche 1 bis 9, **dadurch gekennzeichnet, dass** zur Abdichtung der Lagerwelle (3; 3a, 3b) gegenüber der Innenbuchse (21) eine Dichtungseinrichtung (32), insbesondere eine Stopfbuchspackung (33), vorgesehen ist.

11. Absperrarmatur nach einem der Ansprüche 1 bis 10, **dadurch gekennzeichnet, dass** eine Spülvorrichtung (40) zum Spülen des Ringspaltes zwischen der Gehäusebohrung (23) und der Außenbuchse (22) sowie des Ringspaltes zwischen der Außenbuchse (22) und der Innenbuchse (21) sowie des Ringspaltes zwischen der Innenbuchse (21) und der Lagerwelle (3; 3a, 3b) vorgesehen ist.

12. Absperrarmatur nach einem der Ansprüche 1 bis 11, **dadurch gekennzeichnet, dass** die Absperrscheibe (2) mittels einer durchgehenden Lagerwelle (3) oder einer geteilten Lagerwelle (3a, 3b) beidseitig im Gehäuse (1) drehbar gelagert ist, wobei an jeder Lagerstelle eine Lagerbuchseneinrichtung (5) mit einer Doppelbuchse (20) angeordnet ist.

## Claims

1. Shut-off valve with a housing (1), with a valve seat (V) arranged in the housing (1) and with a shut-off disc (2) which activates the valve seat (V) and which is mounted in the housing (1) by means of a bearing shaft (3; 3a, 3b) rotatably about an axis of rotation (D), arranged perpendicularly to the longitudinal axis (L) of the housing (1), between an opening position and a shut-off position, a bearing bush device (5) being arranged between the housing (1) and the bearing shaft (3; 3a, 3b), **characterized in that** the bearing bush device (5) is designed as a double bush (20) with an inner bush (21) receiving the bearing shaft (3; 3a, 3b) and with an outer bush (22) receiving the inner bush (21) and arranged in a housing bore (23) of the housing (1), the inner bush (21) and the outer bush (22) being designed in each case as an eccentric bush.

2. Shut-off valve according to Claim 1, **characterized in that** the outer bush (22) and the inner bush (21) have oppositely directed eccentricities.

3. Shut-off valve according to Claim 1 or 2, **characterized in that** the valve seat (V) is formed by a sealing surface (10) formed in one piece on the inner wall of the housing (1).

4. Shut-off valve according to one of Claims 1 to 3, **characterized in that** a sealing element (11) which is formed on in one piece and activates the sealing surface (10) is formed on the outer circumference of the shut-off disc (2).

5. Shut-off valve according to one of Claims 1 to 4, **characterized in that** the outer bush (22) is provided with a reception bore (24) which is arranged eccentrically to the housing bore (23) and in which the inner bush (21) is arranged.

6. Shut-off valve according to Claim 5, **characterized in that** the inner bush (21) is provided with a reception bore (25) which is arranged eccentrically to the reception bore (24) of the outer bush (22) and in which the bearing shaft (3; 3a, 3b) is arranged.

7. Shut-off valve according to one of Claims 1 to 6, **characterized in that** the inner bush (21) and the outer bush (22) are provided in each case with a radial flange (R1, R2) which is accessible on the shut-off valve from outside and which allows rotation of the inner bush (21) and of the outer bush (22).

8. Shut-off valve according to one of Claims 1 to 7, **characterized in that**, to seal off the outer bush (22) with respect to the housing bore (23), a sealing device (30), in particular a sealing ring, is provided.

9. Shut-off valve according to one of Claims 1 to 8, **characterized in that**, to seal off the inner bush (21) with respect to the reception bore (24) of the outer bush (22), a sealing device (31), in particular a sealing ring, is provided.

10. Shut-off valve according to one of Claims 1 to 9, **characterized in that**, to seal off the bearing shaft (3; 3a, 3b) with respect to the inner bush (21), a sealing device (32), in particular a stuffing box packing (33), is provided.

11. Shut-off valve according to one of Claims 1 to 10, **characterized in that** a scavenging device (40) for the scavenging of the annular gap between the housing bore (23) and the outer bush (22) and of the annular gap between the outer bush (22) and the inner bush (21) and of the annular gap between the inner bush (21) and the bearing shaft (3; 3a, 3b) is provided.

12. Shut-off valve according to one of Claims 1 to 11, **characterized in that** the shut-off disc (2) is mounted rotatably in the housing (1) on both sides by means of a continuous bearing shaft (3) or a split bearing shaft (3a, 3b), a bearing bush device (5) with a double bush (20) being arranged at each bearing point.

## Revendications

1. Armature de verrouillage comprenant un boîtier (1), un siège de soupape (V) disposé dans le boîtier (1) et un disque de verrouillage (2) commandant le siège de soupape (V), qui est monté dans le boîtier (1) de manière à pouvoir tourner au moyen d'un arbre de palier (3 ; 3a, 3b) autour d'un axe de rotation (D) disposé perpendiculairement par rapport à l'axe longitudinal (L) du boîtier (1) entre une position d'ouverture et une position de verrouillage, un dispositif de douille palier (5) étant disposé entre le boîtier (1) et l'arbre de palier (3 ; 3a, 3b), **caractérisée en ce que** le dispositif de douille palier (5) est réalisé sous forme de douille double (20) avec une douille interne (21) recevant l'arbre de palier (3 ; 3a, 3b) et une douille externe (22) recevant la douille interne (21), disposée dans un alésage de boîtier (23) du boîtier (1), la douille interne (21) et la douille externe (22) étant chacune réalisées sous forme de douille excentrique.

2. Armature de verrouillage selon la revendication 1, **caractérisée en ce que** la douille externe (22) et la douille interne (21) présentent des excentricités opposées.

3. Armature de verrouillage selon la revendication 1 ou 2, **caractérisée en ce que** le siège de soupape (V) est réalisé par une surface d'étanchéité (10) façonnée d'une seule pièce sur la paroi interne du boîtier (1).

4. Armature de verrouillage selon l'une quelconque des revendications 1 à 3, **caractérisée en ce qu'**à la périphérie extérieure du disque de verrouillage (2) est réalisé un élément d'étanchéité façonné d'une seule pièce (11) qui commande la face d'étanchéité (10).

5. Armature de verrouillage selon l'une quelconque des revendications 1 à 4, **caractérisée en ce que** la douille externe (22) est munie d'un alésage de réception (24) disposé de manière excentrée par rapport à l'alésage de boîtier (23), dans lequel est disposée la douille interne (21).

6. Armature de verrouillage selon la revendication 5, **caractérisée en ce que** la douille interne (21) est munie d'un alésage de réception (25) disposé de manière excentrée par rapport à l'alésage de réception (24) de la douille externe (22), dans lequel est disposé l'arbre de palier (3 ; 3a, 3b).

7. Armature de verrouillage selon l'une quelconque des revendications 1 à 6, **caractérisée en ce que** la douille interne (21) et la douille externe (22) sont chacune munies d'une bride radiale (R1, R2) qui est accessible depuis l'extérieur au niveau de l'armature de verrouillage et qui permet une rotation de la douille interne (21) et de la douille externe (22).

8. Armature de verrouillage selon l'une quelconque des revendications 1 à 7, **caractérisée en ce que** pour réaliser l'étanchéité de la douille externe (22) par rapport à l'alésage de boîtier (23), il est prévu un dispositif d'étanchéité (30), en particulier une bague d'étanchéité.

9. Armature de verrouillage selon l'une quelconque des revendications 1 à 8, **caractérisée en ce que** pour réaliser l'étanchéité de la douille interne (21) par rapport à l'alésage de réception (24) de la douille externe (22), il est prévu un dispositif d'étanchéité (31), en particulier une bague d'étanchéité.

10. Armature de verrouillage selon l'une quelconque des revendications 1 à 9, **caractérisée en ce que** pour réaliser l'étanchéité de l'arbre de palier (3 ; 3a, 3b) par rapport à la douille interne (21), il est prévu un dispositif d'étanchéité (32), en particulier une garniture de presse-étoupe (33).

11. Armature de verrouillage selon l'une quelconque des revendications 1 à 10, **caractérisée en ce qu'**il est prévu un dispositif de rinçage (40) pour rincer la fente annulaire entre l'alésage de boîtier (23) et la douille externe (22) ainsi que la fente annulaire entre la douille externe (22) et la douille interne (21) ainsi que la fente annulaire entre la douille interne (21) et l'arbre de palier (3 ; 3a, 3b).

12. Armature de verrouillage selon l'une quelconque des revendications 1 à 11, **caractérisée en ce que** le disque de verrouillage (2) est monté de manière à pouvoir tourner au moyen d'un arbre de palier continu (3) ou d'un arbre de palier divisé (3a, 3b) de chaque côté dans le boîtier (1), un dispositif de douille palier (5) avec une douille double (20) étant disposé au niveau de chaque emplacement de palier.
